# EUROPÄISCHE PATENTANMELDUNG

(11) **EP 4 585 543 A2**
(43) Veröffentlichungstag der Anmeldung: **16.07.2025**
(21) Anmeldenummer: 25151814.8
(22) Anmeldetag: 14.01.2025
(51) Int. Cl.: B65G 57/32, B65H 29/58

(54) **RESTHANDSORTIERVORRICHTUNG UND VERFAHREN ZUM SORTIEREN VON RESTHANDPOSTSTÜCKEN**

(30) Priorität: 15.01.2024 DE 102024101042
(71) Anmelder: Körber Supply Chain Logistics GmbH, 78467 Konstanz (DE)
(72) Erfinder: Eisser, Dirk-Udo, 78479 Reichenau (DE); Vogel, Rainer, 78467 Konstanz (DE)
(74) Vertreter: Müller Schupfner & Partner Patent- und Rechtsanwaltspartnerschaft mbB (Muc)

(57) **Zusammenfassung**

Es wird eine Resthandsortiervorrichtung (1) zum Sortieren von Resthandpoststücken (2) bereitgestellt. Die Resthandsortiervorrichtung (1) umfasst: einen Zulaufförderer (3), der dazu ausgestaltet ist, zumindest ein Resthandpoststück (2) in einer ersten Richtung (R1) zu fördern; zumindest einen Verteilförderer (4), der dazu ausgestaltet ist, das zumindest eine Resthandpoststück (2) von dem Zulaufförderer (3) zu übernehmen und zu zumindest einem Ausgabeförderer (5) zu fördern; und eine Steuereinheit (11), die dazu ausgestaltet ist, den Verteilförderer (4) und/oder den Ausgabeförderer (5) so zu steuern, dass Resthandpoststücke (2) auf dem Ausgabeförderer (5) in einer Sammelanordnung (6) gesammelt werden; wobei der Ausgabeförderer (5) dazu ausgestaltet ist, die Sammelanordnung (6) von Resthandpoststücke (2) in einer zweiten Richtung (R2) zu fördern. Ferner wird ein Verfahren zum Sortieren von Resthandpoststücken (2) bereitgestellt.

## Beschreibung

Die vorliegende Erfindung betrifft eine Resthandsortiervorrichtung zum Sortieren von Resthandpoststücken und ein Verfahren zum Sortieren von Resthandpoststücken.

Heutzutage gibt es für die Brief- und Paketlogistik verschiedene Sortierlösungen. Sie unterscheiden sich im Wesentlichen durch ihre Spezialisierung auf ein bestimmtes Sendungsspektrum, den Funktionsumfang, die Sortiertiefe und den Durchsatz. So gibt es beispielsweise Brief- und Großbrief-Verteilanlagen, Anlagen für die Verteilung von Päckchen und Paketen. Bei all diesen Anlagen können Poststücke auftreten, die aufgrund ihrer physikalischen Eigenschaften und/oder Nicht-Lesbarkeit der Adresse, nicht sortiert werden können. Solche Sendungen werden als Resthandpoststücke, Resthandstückgüter oder als Resthandsendungen bezeichnet. Diese Poststücke werden aus dem automatisierten Sortierprozess ausgeschleust und einer so genannten Resthandsortierung zugeführt. Dort müssen die Poststücke von Hand sortiert werden, was einen hohen personellen Aufwand und damit einhergehend hohe Kosten verursacht.

Daher ist es eine Aufgabe der vorliegenden Erfindung, eine Resthandsortierung zu vereinfachen.

Das Problem wird mit einer Resthandsortiervorrichtung zum Sortieren von Resthandpoststücken mit den Merkmalen des Anspruchs 1 und mit einem Verfahren zur Sortierung von Resthandpoststücken mit den Merkmalen des Anspruchs 15 gelöst.

Gemäß einem Aspekt der vorliegenden Erfindung wird eine Resthandsortiervorrichtung zum Sortieren von Resthandpoststücken bereitgestellt. Die Resthandsortiervorrichtung kann einen Zulaufförderer, der dazu ausgestaltet ist, zumindest ein Resthandpoststück in einer ersten Richtung zu fördern, umfassen. Ferner kann die Resthandsortiervorrichtung zumindest einen Verteilförderer, der dazu ausgestaltet ist, das zumindest eine Resthandpoststück von dem Zulaufförderer zu übernehmen und zu zumindest einem Ausgabeförderer zu fördern, umfassen. Ferner kann die Resthandsortiervorrichtung eine Steuereinheit, die dazu ausgestaltet ist, den Verteilförderer und/oder den Ausgabeförderer so zu steuern, dass Resthandpoststücke auf dem Ausgabeförderer in einer Sammelanordnung gesammelt werden, umfassen. Der Ausgabeförderer kann dazu ausgestaltet sein, die Sammelanordnung von Resthandpoststücken in einer zweiten Richtung zu fördern.

Gegenüber dem bekannten Stand der Technik liefert die vorliegende Erfindung den Vorteil, dass eine automatisierte Sortierung von Resthandpoststücken mit einem großen Sendungsspektrum mit einer einfachen Sortieranlage möglich ist. Ferner kann bei der obigen Resthandsortiervorrichtung eine Anzahl der Sendungseingaben und Endstellen frei konfiguriert werden. Durch die Sammelanordnung kann ein platzsparendes Speichern und Bereitstellen der sortierten Resthandpoststücke auf dem Ausgabeförderer realisiert sein. Ferner bietet sich durch die Sammelanordnung auf dem Ausgabeförderer die Möglichkeit, die Resthandpoststücke von dort manuell zu entnehmen und mittels Handverteilung nach dem First-in-First-out-Prinzip beispielsweise in einem Wurfkreis weiter zu verarbeiten. Mit anderen Worten können die Resthandpoststücke nicht vermischt oder beliebig auf dem Ausgabeförderer bereitgestellt werden (wie es beispielsweise bei einem Behälter oder Container in einer herkömmlichen Endstelle der Fall wäre), sondern in der Reihenfolge, in der die Resthandpoststücke dem Ausgabeförderer zugeführt worden sind. Zusätzlich oder alternativ ist es durch die Sammelanordnung auf dem Ausgabeförderer möglich die dort gesammelten Resthandpoststücke in der Sammelanordnung in Behältern abzulegen und weiter zu transportieren (d.h. unter Beibehaltung der Sammelanordnung). Die Sammelanordnung ist also keine normale Förderstrecke, auf der die Resthandpoststücke in beliebiger Anordnung weitergefördert werden, sondern eine Anordnung der Resthandpoststücke, in der die Resthandpoststücke präsentiert werden. Damit können die Resthandpoststücke problemlos unter Beibehaltung der Förderreihenfolge präsentiert werden und entnommen werden. Ferner besteht bei der Resthandsortiervorrichtung die Möglichkeit ausgewählte Resthandpoststücke einer Sonderendstelle zuzuführen. Die Resthandsortiervorrichtung ist zudem geeignet für ein breites Spektrum an Resthandpoststücken, beispielsweise von einer Postkarte bis zum Päckchen, insbesondere mit einer Dicke bis zu 150 mm. Durch die Sammelanordnung auf dem Ausgabeförderer kann eine große Menge an Resthandpoststücken in dem Ausgabeförderer gespeichert werden, bevor eine Entnahme notwendig ist. Dadurch können die Arbeitsabläufe verbessert werden und in der Effizienz gesteigert werden. Ferner kann durch die Sammelanordnung eine Sortierreihenfolge der Resthandpoststücke beibehalten werden. Ferner kann durch die Anordnung der Resthandpoststücke der Sammelanordnung auf dem Ausgabeförderer der Nutzer entscheiden, welche Anzahl von Resthandpoststücken von dem Ausgabeförderer entnommen werden soll. Zusätzlich können Behälter mit den Resthandpoststücken in der Sammelanordnung unter Beibehaltung der Sortierreihenfolge befüllt werden. Daher kann mit der vorliegenden Erfindung eine deutliche Effizienzsteigerung gegenüber einer bisher bekannten manuellen Resthandsortierung erreicht werden. Insbesondere sind bei der vorliegenden Erfindung, keine hochgeschulten Mitarbeiter notwendig, die eine Resthandsortierung sorgsam durchführen. Vielmehr genügt es, die Resthandpoststücke der Resthandsortiervorrichtung auf eine bestimmte Weise zuzuführen und die dann sortierten und der Sammelanordnung ausgegebenen Resthandpoststücke wieder zu entnehmen, ohne dass eine Reihenfolge der Resthandpoststücke beachtet werden muss. Vorzugsweise können die Resthandpoststücke auf dem Ausgabeförderer in einer anderen Anordnung als auf dem Zulaufförderer transportiert und/oder angeordnet werden. Mit anderen Worten können die Resthandpoststücke, die auf dem Ausgabeförderer in der Sammelanordnung vorliegen auf dem Zulaufförderer in einer anderen Art und Weise angeordnet sein. Beispielsweise können die Resthandpoststücke auf dem Zulaufförderer einzeln (d.h. nacheinander und ohne Kontakt zueinander) transportiert werden. Dadurch kann eine optimale Verteilung oder Handhabung durch den Verteilförderer gewährleistet sein. Auf dem Ausgabeförderer können die Resthandpoststücke dann miteinander in Kontakt stehen. Beispielsweise können sich die Resthandpoststücke auf dem Ausgabeförderer zumindest teilweise überlappen. Dadurch können die Resthandpoststücke, insbesondere unterschiedliche Resthandpoststücke, platzsparend und in der Förderreihenfolge auf dem Ausgabeförderer bereitgestellt werden. Durch die einzelne Anföderung auf dem Zulaufförderer können die Resthandpoststücke gehandhabt werden. Werden die Resthandpoststücke in einem engen Kontakt zueinander zugefördert ist eine Verteilung mittels Verteilförderer nicht möglich.

Resthandpoststücke können diejenigen Stückgüter, Poststücke oder Postsendungen sein, die einer maschinellen Verarbeitung nicht zugänglich sind. Dies kann aus Gründen von Eigenschaften des jeweiligen Poststücks oder aufgrund von unvollständigen Angaben zu der Adresse oder Unlesbarkeiten herrühren. Solche Poststücke werden aus dem automatisierten Abfertigungsprozess ausgeschleust und der sogenannten Resthandsortierung zugeführt. Hierbei kann es sich beispielsweise auch um besonders unförmige oder nicht maschinenfähige Poststücke handeln. Ein Poststücke kann eine Postkarte, Kuvert, Versandtasche, Päckchen, Smalls, Paket, Transportrolle; Polybag oder dergleichen sein. Die Resthandpoststücke müssen ebenfalls nach bestimmten Sortierkriterien, beispielsweise die Postleitzahl, sortiert werden, um entsprechend weiterverarbeitet werden zu können. Die so aus dem automatisierten Verarbeitungsprozess ausgeschleusten Poststücke werden der Resthandsortierung zugeführt und sodann als Resthandpoststücke bezeichnet. Die Resthandpoststücke können auf einen Zulaufförderer aufgebracht werden. Das Aufbringen der Resthandpoststücke auf den Zulaufförderer kann in einer solchen Weise geschehen, dass die Adresse für ein über dem Zulaufförderer angeordnetes Erkennungssystem erkennbar ist. Beispielsweise kann das zumindest eine Resthandpoststück mit der Andresse nach oben auf den Zulaufförderer aufgebracht werden. Dadurch kann ein Erkennungsprozess vereinfacht werden, da die Position der Adressinformation auf dem Resthandpoststück bekannt ist. Der Zulaufförderer kann ein Förderband sein, dass dazu ausgestaltet ist, die Resthandpoststücke zu transportieren. Der Zulaufförderer kann jedoch auch ein Rollenförderer, Kugelförderer oder eine andere Fördereinrichtung sein, die Resthandpoststücke in der ersten Richtung transportieren kann. Der Zulaufförderer kann zumindest ein Resthandpoststück in der ersten Richtung fördern. Von dem Zulaufförderer kann das zumindest eine Resthandpoststück auf einen Verteilförderer aufgebracht werden. Der Verteilförderer kann dazu ausgestaltet sein, das Resthandpoststück zu verteilen. Mit anderen Worten kann der Verteilförderer aktiv und individuell ein Poststück an ein bestimmtes Ziel verteilen. Der Verteilförderer kann wie der Zulaufförderer als Bandförderelement, Rollenförderer, Kugelförderer und dergleichen ausgestaltet sein. Der Verteilförderer kann aktiv angesteuert werden, um das Resthandpoststück zu verteilen. Das Resthandpoststück kann passiv oder aktiv von dem Zulaufförderer auf den Verteilförderer aufgebracht werden. Von dem Verteilförderer kann das Resthandpoststück aktiv (z.B. gesteuert) auf einen Ausgabeförderer überführt werden. Mit anderen Worten kann der Verteilförderer das zumindest eine Resthandpoststück dem Ausgabeförderer zuführen. Die Resthandvorrichtung kann eine Steuereinheit umfassen, die den Betrieb der Resthandsortiervorrichtung steuern kann. Die Steuereinheit kann eine computerähnliche Vorrichtung sein, die Information aufnehmen kann, Information verarbeiten kann, und Information ausgeben kann. Die Steuereinheit kann also Eingangsinformationen aufnehmen, intern Verarbeitungsprozesse durchführen und Steuerungsbefehle als Ausgabeinformationen ausgeben. Die Steuereinheit kann beispielsweise den Verteilförderer steuern, um zu bestimmen, wann der Verteilförderer ein darauf befindliches Resthandpoststücke zu welchem Ziel zuführt. Der Ausgabeförderer kann, wie der Verteilförderer und/oder der Zulaufförderer ein Bandförderer, Rollenförderer, Kugelförderer oder dergleichen sein. Die Steuereinheit kann auch den Ausgabeförderer steuern, um diesen aktiv anzutreiben. Der Verteilförderer kann also ein Resthandpoststück auf zumindest einen Ausgabeförderer basierend auf einer Steuerung der Steuereinheit zuführen. Dabei kann das Resthandpoststück so auf dem Ausgabeförderer angeordnet sein, dass das zumindest ein Resthandpoststück in einer Sammelanordnung angeordnet ist. Unter Sammelanordnung kann eine bestimmte Orientierung und/oder Position eines Resthandpoststücks verstanden werden. Ferner kann eine Sammelanordnung auch eine bestimmte relative Positionierung mehrerer Resthandpoststücke auf dem Ausgabeförderer zueinander definieren. Ist beispielsweise auf dem Ausgabeförderer bereits ein Resthandpoststück vorhanden und soll der Verteilförderer ein weiteres Resthandpoststück auf dem Ausgabeförderer zuführen, kann die Steuereinheit entweder den Verteilförderer alleine oder den Verteilförderer und den Ausgabeförderer zusammen steuern, um eine gewünschte Sammelanordnung zu erzielen. So kann beispielsweise die Steuereinheit dazu ausgestaltet sein, eine relative Positionierung zweier Resthandpoststücke auf dem Ausgabeförderer zu erzielen. Ferner kann der Ausgabeförderer dazu ausgestaltet sein, Resthandpoststücke zu sammeln. Mit anderen Worten kann der Ausgabeförderer als Zwischenspeicher dienen, bevor die Resthandpoststücke weiterverarbeitet werden. Dadurch können die Abläufe bei der Handhabung der Resthandpoststücke vereinfacht und in ihrer Effizienz gesteigert sein. Die Sammelanordnung kann ferner die Resthandpoststücke in der Reihgenfolge bereitstellen, wie sie dem Ausgabeförderer zugeführt worden sind. Dadurch kann eine Reihenfolge der Resthandpoststücke beibehalten werden (First-in First-out Prinzip). Ferner kann der Ausgabeförderer dazu ausgestaltet sein, die Sammelanordnung in der zweiten Richtung zu fördern. Mit anderen Worten kann der Ausgabeförderer nicht lediglich ein Sammelort sein, sondern so durch die Steuereinheit gesteuert werden, dass die gebildete Sammelanordnung weitertransportieren. Dadurch kann sichergestellt sein, dass die Sammelanordnung, welche eine bestimmte Anordnung von Resthandpoststücken relativ zueinander sein kann, auch für eine Vielzahl von Resthandpoststücken auf dem Ausgabeförderer realisiert sein kann. Mit anderen Worten kann durch Wegschaffen der ersten Resthandpoststücke, welche auf den Ausgabeförderer aufgebracht werden, immer wieder neuer Platz geschaffen werden, um weitere Resthandpoststücke in der Sammelanordnung auf dem Ausgabeförderer anzuordnen. Dadurch kann eine Vielzahl von Resthandpoststücken in der gewünschten Sammelanordnung auf dem Ausgabeförderer bereitgestellt werden.

Vorzugsweise überlappen sich zumindest zwei Resthandpoststücke in der Sammelanordnung zumindest teilweise. Mit anderen Worten kann die Steuereinheit den Verteilförderer und/oder den Ausgabeförderer so steuern, dass ein zweites Resthandpoststück, welches nach einem ersten Resthandpoststücke auf den Ausgabeförderer aufgebracht wird, zumindest teilweise auf dem ersten Resthandpoststück zu liegen kommt. Dadurch kann die Anzahl an Resthandpoststücken, welche auf den Ausgabeförderer angeordnet sein können, erhöht werden. Dadurch kann die Speicherkapazität des Ausgabeförderers gesteigert werden. Durch die teilweise Überlappung kann die Reihenfolge, in der die Resthandpoststücke abgelegt worden sind beibehalten werden.

Vorzugsweise ist der Verteilförderer dazu ausgestaltet, mehrere Resthandpoststücke aufzunehmen. Mit anderen Worten können auf dem Verteilförderer eine Vielzahl von Resthandpoststücken gesammelt werden, bevor die Resthandpoststücke an den Ausgabeförderer abgegeben werden. Vorzugsweise ist der Verteilförderer dazu ausgestaltet die Vielzahl von Resthandpoststücken zumindest abschnittsweise aufeinanderliegend zu sammeln. Dies kann durch ein schrittweises bewegen des Verteilförderers nach einer Aufnahme eines Resthandpoststücks erfolgen. Dadurch kann bereits auf dem Verteilförderer eine Sammelanordnung gebildet werden. Die so auf dem Verteilförderer erzeugte Sammelanordnung kann dann auf einmal dem Ausgabeförderer zugeführt werden. Ferner kann eine bestimmte Anzahl von Resthandpoststücken, insbesondere nach einem Ausschleusen durch das Fördermodul, auf dem Verteilförderer aufeinandergelegt werden, d.h. zu gestapelt werden. Wenn eine bestimmte Stapelhöhe auf dem Verteilförderer erreicht ist, bzw. der Sortierplan ein Abtransport der gestapelten Resthandpoststücke erlaubt, werden diese dem Ausgabeförderer zugeführt. D.h. die gestapelten Resthandpoststücke werden wahlweise in der Sammelanordnung auf den Ausgabeförderern transportiert oder wie ein nicht schindelfähiges Resthandpoststück behandelt. Dadurch kann der Anlagendurchsatz, z.B. bei zwei aufeinanderfolgenden Resthandpoststücken mit gleichem Sortierziel, weiter gesteigert werden. Des Weiteren kann eine größere Anzahl von Resthandpoststücken in der Sortierendstelle bzw. auf den Ausgabeförderern gespeichert werden.

Vorzugsweise ist die Steuereinheit dazu ausgestaltet, den Verteilförderer und/oder den Ausgabeförderer so zu steuern, dass ein Resthandpoststück, welches zuerst auf den Ausgabeförderer aufgebracht ist, zumindest abschnittsweise weiter in der zweiten Richtung vorragt als ein danach auf den Ausgabeförderer aufgebrachtes Resthandpoststück. Mit anderen Worten können sich zumindest zwei auf dem Ausgabeförderer angeordnete Resthandpoststücke so überlappen, dass immer noch das zuerst auf den Ausgabeförderer aufgebrachte Stückgut erkennbar ist.

Mit anderen Worten ist das zuerst auf den Ausgabeförderer aufgebrachte Poststück weiter vorne in der zweiten Richtung (d.h. in der Förderrichtung des Ausgabeförderers) angeordnet. Dadurch kann die Sortierreihenfolge auch bei einer Vielzahl von Resthandpoststücken, welche in der Sammelanordnung auf dem Ausgabeförderer angeordnet ist, beibehalten werden.

Vorzugsweise sind die erste Richtung und die zweite Richtung windschief zueinander ausgerichtet. Mit anderen Worten kann also die zweite Richtung, in welcher der Ausgabeförderer die Resthandpoststücke fördert, an einer anderen Höhenposition relativ zu der ersten Richtung, in welcher der Zulaufförderer das zumindest eine Resthandpoststück fördert, angeordnet sein. Dadurch kann eine Übergabe von dem Zulaufförderer auf den Ausgabeförderer vereinfacht sein. Ferner kann dadurch ein kompaktes Gesamtsystem realisiert sein.

Vorzugsweise liegt die erste Richtung in einer ersten Ebene, wobei die zweite Richtung in einer zweiten Ebene liegen kann und wobei die erste Ebene und die zweite Ebene voneinander beabstandet sein können. Mit anderen Worten kann der Ausgabeförderer und der Zulaufförderer an unterschiedlichen Höhenpositionen angeordnet sein. Dadurch kann eine besonders platzsparende Resthandsortiervorrichtung bereitgestellt sein.

Vorzugsweise sind die Resthandpoststücke in der Sammelanordnung zumindest abschnittsweise schindelartig angeordnet. Eine schindelartige Anordnung kann eine Anordnung sein, bei der sich die Resthandpoststücke zumindest teilweise überlappen. Dabei kann die Überlappung von aneinander angrenzenden Resthandpoststückpaaren immer ähnlich sein. Dadurch kann eine homogene Sammelanordnung auf dem Ausgabeförderer realisiert sein.

Vorzugsweise werden die Resthandpoststücke in der Sammelanordnung auf dem Ausgabeförderer zumindest abschnittsweise in einem Schuppenstrom in der zweiten Richtung gefördert. Mit anderen Worten kann der Schuppenstrom (d. h. die Sammelanordnung von Resthandpoststücken) in einer konstanten Anordnung in der zweiten Richtung auf dem Ausgabeförderer gefördert werden. Dadurch kann eine Speicherkapazität des Ausgabeförderers gesteigert werden, ohne dass eine Reihenfolge der Resthandpoststücke verändert wird.

Vorzugsweise ist die Steuereinheit dazu ausgestaltet, den Verteilförderer und/oder den Ausgabeförderer basierend auf zumindest einer Information über das zumindest eine Resthandpoststück so zu steuern, dass das Resthandpoststück auf dem Ausgabeförderer in der Sammelanordnung angeordnet ist. Die Steuereinheit kann beispielsweise Informationen über das zu handhabende bzw. das zu sortierende Resthandpoststück erlangen. Bei der zumindest einen Information kann es sich beispielsweise um eine Abmessung des Resthandpoststücks handeln. Durch Kenntnis der Abmessung des Resthandpoststücks kann die Steuereinheit den Ausgabeförderer und/oder den Verteilförderer so steuern, dass das von dem Verteilförderer auf den Ausgabeförderer übergebene Resthandpoststück in einer gewünschten Weise zu liegen kommt. Dies ist besonders vorteilhaft, wenn eine große Zahl unterschiedlich dimensionierter Resthandpoststücke vorliegen. Dadurch kann unabhängig von der Dimension des jeweiligen Resthandpoststücks eine Sammelanordnung in einer ähnlichen Weise unabhängig von der Dimensionierung der jeweiligen Resthandpoststücke realisiert sein.

Vorzugsweise ist der Verteilförderer dazu ausgestaltet, dass zumindest eine Resthandpoststück entweder zu einem ersten Ausgabeförderer oder zu einem zweiten Ausgabeförderer zu fördern. Mit anderen Worten kann der Verteilförderer so ausgestaltet sein, ein darauf befindliches Poststück in zwei unterschiedliche Richtungen zu fördern. Vorzugsweise ist der Verteilförderer dazu ausgestaltet, in zwei unterschiedliche Richtungen antreibbar zu sein. Vorzugsweise sind die beiden Richtungen entgegengesetzt zueinander. Beispielsweise ist der Verteilförderer ein Bandförderer, der entweder in der einen Richtung oder in der anderen Richtung angetrieben werden kann. Somit kann der Verteilförderer ein Resthandpoststück entweder in die eine Richtung oder in eine entgegengesetzte andere Richtung fördern. Dadurch kann die Resthandsortiervorrichtung insgesamt kompakter ausgestaltet sein. Ferner können somit die möglichen Ziele der Resthandpoststücke erhöht werden, ohne dass das System eine wesentlich größere Flächenausdehnung benötigen würde. Vorzugsweise ist der zweite Ausgabeförderer in einer der zweiten Richtung entgegengesetzten Richtung angrenzend an den Verteilförderer angeordnet.

Vorzugsweise ist der Verteilförderer in einer dritten Ebene angeordnet, wobei die dritte Ebene zumindest abschnittsweise von der ersten Ebene und/oder von der zweiten Ebene, beabstandet ist. Vorzugsweise kann der Verteilförderer zwischen der ersten Ebene und der zweiten Ebene angeordnet sein. Bei der dritten Ebene, in welcher der Verteilförderer angeordnet sein kann, kann es sich um eine Ebene handeln, in der sich die Oberfläche des Verteilförderers befindet. Die Oberfläche des Verteilförderers kann durch eine Kontaktfläche zwischen Verteilförderer und einem darauf aufgebrachten Resthandpoststück definiert sein. Vorzugsweise kann ein Resthandpoststück also von der ersten Ebene auf den Verteilförderer gefördert werden und von dem Verteilförderer auf die zweite Ebene weiterbefördert werden. Somit kann das Resthandpoststück beim Durchlaufen der Resthandsortiervorrichtung stets in der Schwererichtung abwärts befördert werden. Dadurch kann ein effizientes Handhaben des Resthandpoststücks realisiert sein, da dieses nicht entgegen der Schwererichtung bewegt werden muss.

Vorzugsweise ist der Verteilförderer hinsichtlich des Zulaufförderers und/oder des Ausgabeförderers geneigt. Durch die Neigung des Verteilförderers kann sichergestellt sein, dass ein Resthandpoststück immer an derselben Position auf dem Verteilförderer zu liegen kommt (z.B. unabhängig von der Größe des Resthandpoststücks). Daher kann eine Ausgangssituation, von welcher ein Resthandpoststück von dem Verteilförderer auf den Ausgabeförderer weiter gefördert wird, bekannt sein, sodass die Steuereinheit problemlos die Sammelanordnung auf dem Ausgabeförderer realisieren kann. Mit anderen Worten kann durch die Neigung des Verteilförderers die Schwerkraft genutzt werden, um ein von dem Zulaufförderer zugeführtes Resthandpoststück in eine vorbestimmte Position zu bringen.

Vorzugsweise weist der Verteilförderer eine Neigung zu der horizontalen in einem Bereich von 8° bis 12°, bevorzugt von ungefähr 10°, auf. In dem Bereich von 8° bis 12° hatte sich gezeigt, dass es für die üblichen Poststücke ausreichend ist, um die Reibung zwischen Poststück und Verteilfördereroberfläche zu überwinden und in die vorbestimmte Lage auf dem Verteilförderer zu gelangen. Soll eine große Menge von in Folie verpackten Resthandpoststücken verteilt werden, hat sich herausgestellt, dass eine Neigung des Verteilförderers von ungefähr 10° zu bevorzugen ist. Bei einer steileren Neigung, kann es dazu kommen, dass es durch die geringe Reibung zwischen den tütenartigen Resthandpoststücken und der Oberfläche des Verteilförderers zu hohen Transportgeschwindigkeiten kommen kann, wodurch ein kleineres und leichteres Resthandpoststück Gefahr läuft von dem Verteilförderer hinunterzufallen.

Vorzugsweise weist der Verteilförderer ein Leitelement auf, welches dazu ausgestaltet ist, zumindest ein Resthandpoststück, welches von dem Zulaufförderer zugeführt wird, zu führen. Das Leitelement kann beispielsweise auch als Anschlagelement dienen, um die vordefinierte Position auf dem Verteilförderer festzulegen. Wird der Verteilförderer dann aktiviert, kann das Stückgut entlang des Leitelements geführt werden, bis es den Verteilförderer verlässt und dem Abgabeförderer zugeführt wird. Dadurch kann sichergestellt sein, dass das Resthandpoststück sicher von dem Verteilförderer auf den Abgabeförderer überführt wird.

Vorzugsweise ist der Verteilförderer relativ zu der ersten Richtung geneigt. Wohingegen die zweite Richtung parallel zu dem Verteilförderer verlaufen kann.

Vorzugsweise weist der Zulaufförderer zumindest ein schwenkbares Fördermodul auf, wobei das zumindest eine Fördermodul dazu ausgestaltet sein kann, das Resthandpoststück entweder zu dem Verteilförderer zu fördern oder weiter auf den Zulaufförderer zu fördern. Das zumindest eine schwenkbare Fördermodul kann ein Element sein, welches ein Resthandpoststück aktiv von dem Zulaufförderer auf den Verteilförderer aufbringen kann. Damit kann aktiv gesteuert werden, welches Resthandpoststücke auf welchen Verteilförderer aufgebracht wird (wenn beispielsweise eine Vielzahl von Verteilförderern vorgesehen sind). Das Fördermodul kann eine Ausschleusung von zumindest einem Resthandpoststück realisieren.

Vorzugsweise weist der Zulaufförderer zumindest ein schwenkbares Fördermodul auf, wobei das schwenkbare Fördermodul um eine Schwenkachse schwenkbar ist. Die Schwenkachse ist vorzugsweise orthogonal zu der ersten Richtung. Dadurch kann das auszuschleusende Resthandpoststücke entweder nach oben oder nach unten (relativ zu der Schwererichtung) von dem Zulaufförderer ausgeschleust werden. Dadurch ist es möglich, im laufenden Fördererbetrieb des Zulaufförderers bestimmte Resthandpoststücke auszuschleusen, insbesondere ohne den Transport anderer Resthandpoststücke zu beeinflussen (z.B. anzuhalten).

Vorzugsweise ist das Fördermodul zwischen einer ersten Position und einer zweiten Position verschwenkbar, wobei das Fördermodul in der ersten Position in einer ersten Ebene angeordnet sein kann, und wobei das Fördermodul in der zweiten Position relativ zu der ersten Ebene geneigt sein kann. Mit anderen Worten kann das Fördermodul in der ersten Position ein Teil des Zulaufförderers bilden. Befindet sich das Fördermodul also in der ersten Position, kann eine kontinuierliche Fördererstrecke des Zulaufförderers realisiert sein, sodass ein Resthandpoststück das Fördermodul problemlos überfahren kann und weiter in der ersten Richtung transportiert werden kann. In der zweiten Position dagegen kann das Fördermodul geneigt sein, sodass ein Resthandpoststück von der ersten Richtung abgebracht bzw. abgelenkt wird und in eine andere Richtung weitertransportiert wird.

Vorzugsweise ist das Fördermodul in der zweiten Position vorzugsweise in einem Bereich von 15° bis 24°, bevorzugt ungefähr 19°, relativ zu der Horizontalen geneigt. In dem Bereich von 15° bis 24° hat sich gezeigt, dass die Resthandpoststücke selbst bei einer Neigung des Fördermoduls nach unten relativ zu der Schwererichtung nach wie vor auf dem Fördermodul aufliegen und somit problemlos dem Verteilförderer zugeführt werden können. Bei einer steileren Neigung, kann es dazu kommen, dass Resthandpoststücke den Kontakt zu dem Fördermodul verlieren, wodurch es zu einem Rollen bzw. Überschlagen der Resthandpoststücke kommen kann, was wiederum zu Schäden der Resthandpoststücke führen kann. Bei der Neigung von ungefähr 19° hat sich herausgestellt, dass die Resthandpoststücke zügig zu dem Verteilförderer gefördert werden können, sodass das Fördermodul rasch wieder in die erste Position zurückgeführt werden kann, sodass der Zulaufförderer weiter Resthandpoststücke fördern kann. Dadurch ist eine schnelle Taktung der Resthandpoststücke auf den Zulaufförderer ermöglicht.

Vorzugsweise ist die zweite Position abhängig von dem Resthandpoststück. Mit anderen Worten kann die zweite Position variabel sein, abhängig von dem Resthandpoststück. Genauer gesagt kann das Fördermodul abhängig von dem Resthandpoststück verschwenkt werden (d.h. in die zweite Position gebracht werden). Vorzugsweise wird das Fördermodul abhängig von zumindest einer Abmessung des Resthandpoststücks verschwenkt. Beispielsweise kann das Fördermodul bei einer Höhe des Resthandpoststücks von ca. 150 mm um ca. 19° verschwenkt werden (d.h. relativ zu der ersten Position). Bei einer Höhe des Resthandpoststücks kann das Fördermodul dagegen vorzugsweise um ca. 10° verschwenkt werden. Damit kann sichergestellt sein, dass das Fördermodul nur um den nötigen Schwenkwinkel verschwenkt wird. Mit anderen Worten ist es nicht notwendig das Fördermodul weiter zu verschwenken als notwendig ist, damit das Resthandpoststück gefördert werden kann. Somit kann eine Taktung der gehandhabten Resthandpoststücke erhöht werden. Ferner kann das Fördermodul abhängig von einem Gewicht des Resthandpoststücks verschwenkt werden. Somit kann eine Hangabtriebskraft, welche auf das Resthandpoststück wirkt, genau eingestellt sein. Ferner kann bei einem Auflegen eines Resthandpoststücks auf den Eingabeförderer, eine Position des Resthandpoststücks auf dem Eingabeförderern und/oder eine Abmessungen des Resthandpoststücks bestimmt (z.B. erkannt) werden. Mit der Information der Abmessungen des Resthandpoststücks (z.B. Resthandpoststückhöhe oder Sendungshöhe) kann der Schwenkwinkel des Fördermoduls entsprechend des auszuschleusenden Resthandpoststücks gewählt werden. Dadurch kann die für den Schwenkvorgang erforderliche Lücke zwischen den Resthandpoststücken, für Resthandpoststücke mit geringerer Sendungshöhe, kleiner gewählt werden, was höhere Anlagendurchsätze ermöglicht. Des Weiteren erleichtern flachere (d.h. geringere) Fördermodul-Schwenkwinkel ein Aufeinanderlegen von Resthandpoststücken auf dem Verteilförderer.

Vorzugsweise weist der Ausgabeförderer zumindest einen ersten Förderabschnitt und einen zweiten Förderabschnitt auf, wobei der erste Förderabschnitt in Förderrichtung stromaufwärts angeordnet ist und relativ zu dem zweiten Fördererabschnitt geneigt ist. Mit anderen Worten kann der erste Förderabschnitt relativ zu der zweiten Richtung geneigt sein. Demgegenüber kann der erste Förderabschnitt parallel zu der ersten Richtung verlaufen. Vorzugsweise ist der erste Förderabschnitt so geneigt, dass ein auf den Ausgabeförderer aufgebrachtes Resthandpoststück entgegen der Schwererichtung gefördert werden muss. Dies hat den Vorteil, dass ein Resthandpoststück, welches auf den Ausgabeförderer aufgebracht wird, und auf ein anderes Resthandpoststück aufliegt soweit zurückrutschen kann, bis es selber Kontakt mit der Oberfläche des Ausgabeförderers hat. Dadurch kann sichergestellt sein, dass die Sortierreihenfolge gewahrt bleibt, selbst wenn viele Resthandpoststücke nacheinander auf den Ausgabeförderer aufgebracht werden. Dabei hat sich herausgestellt, dass eine Neigung von ungefähr 4° des ersten Fördererabschnitts relativ zu der horizontalen ausreicht, um diese Wirkung zu erzielen. Die Oberfläche des Ausgabeförderers kann hierbei eine höhere Rauigkeit aufweisen als die Oberfläche von den Restpoststücken. Dadurch kann die Haftung der Resthandpoststücke auf dem Ausgabeförderer verbessert sein.

Vorzugsweise sind der erste Förderabschnitt und der zweite Förderabschnitt synchron zueinander antreibbar. Dadurch kann auch auf dem zweiten Förderabschnitt, der stromabwärts des ersten Förderabschnitts in der zweiten Richtung angeordnet ist, ein gleichmäßiger Transport sichergestellt sein.

Vorzugsweise weist die Resthandsortiervorrichtung zumindest einen Sensor auf, der dazu ausgestaltet ist, zu detektieren, ob ein Resthandpoststück eine Sammelanordnungsgrenze übersteigt oder nicht, und eine Messinformation auszugeben. Der Sensor kann beispielsweise als eine Lichtschranke realisiert sein. Beispielsweise ist der Sensor so angeordnet, dass er ein Resthandpoststück, welches auf dem Förderabschnitt transportiert wird, hinsichtlich der Sammelanordnungsgrenze überprüfen kann. Ferner kann der Sensor unmittelbar stromabwärts in der zweiten Richtung von dem Punkt angeordnet sein, wo ein Resthandstückgut von dem Verteilförderer auf den Ausgabeförderer aufgebracht wird. Wird durch den Sensor detektiert, dass eine Sammelanordnungsgrenze von einem Resthandpoststück überschritten ist, d. h. insbesondere das Poststück in der Schwererichtung eine zu große Dimensionierung aufweist, kann der Ausgabeförderer so gesteuert werden, dass eine nachfolgendes Resthandpoststück nicht auf das zuvor geförderte Resthandpoststück (d.h. das Resthandpoststück, welches die Sammelanordnungsgrenze übersteigt) aufgebracht wird. Mit anderen Worten kann das zuvor aufgebrachte Resthandpoststücke als einzelnes Poststück gehandhabt werden. Dadurch ist sichergestellt, dass sich die Resthandpoststücke auf dem Ausgabeförderer nicht übermäßig auftürmen, was zu Instabilitäten führen könnte. Mit anderen Worten kann die Steuereinheit dazu ausgestaltet sein, basierend auf der Messinformation den Ausgabeförderer und/oder den Verteilförderer steuern.

Vorzugsweise ist die Steuereinheit dazu ausgestaltet, den Ausgabeförderer schrittweise anzutreiben. Mit anderen Worten kann nach Auftreffen eines Resthandpoststücks auf den Ausgabeförderer, der Ausgabeförderer einen Schritt weiter angetrieben bzw. bewegt werden, bis das nächste Resthandpoststück auf diesen auftrifft. Mit anderen Worten kann der Ausgabeförderer nicht kontinuierlich angetrieben werden, sondern schrittweise. Dadurch kann sichergestellt sein, dass die Sammelanordnung auch bei stockendem Nachschub von Resthandpoststücken stets zufriedenstellend realisiert sein kann.

Vorzugsweise weist der Ausgabeförderer eine Schnittstelle auf, über die ein Nutzer einen kontinuierlichen Fördererbetrieb des Ausgabeförderers aktivieren und/oder deaktivieren kann. Mit anderen Worten kann ein Nutzer eine auf dem Ausgabeförderer befindliche Sammelanordnung von Resthandpoststücken aktiv an ein Ende des Ausgabeförderers transportieren lassen. Dies ist beispielsweise von Vorteil, wenn ein Nutzer gerade einen Ausgabeförderer entleeren will und dazu die Schnittstelle beispielsweise in Form eines Schalters, betätigt, um alle Resthandpoststücke ans Ende des Ausgabeförderers transportieren zu lassen. Dadurch können alle oder ein Teil der auf dem Ausgabeförderer befindlichen Resthandpoststücke zu einem Ende des Ausgabeförderers transportiert werden und dort von dem Nutzer entnommen werden oder in bereitgestellte Behälter überführt werden.

Vorzugsweise kann der Ausgabeförderer einen Sensor an einem Ende des Ausgabeförderers umfassen, der detektieren kann, ob ein Resthandpoststück am Ende des Ausgabeförderers vorhanden ist. Dadurch kann signalisiert werden, dass der Ausgabeförderer vollständig gefüllt ist, und als nächstes entleert werden könnte. Dies bietet den Vorteil, dass ein Nutzer aktiv darauf hingewiesen wird, wenn ein Ausgabeförderer befüllt ist, sodass der Nutzer diesen leeren kann. Ferner kann ein weiteres Zuführen von Resthandpoststücken zu diesem Ausgabeförderer unterbunden werden.

Vorzugsweise ist der Ausgabeförderer dazu ausgestaltet, Resthandpoststücke, die in der Sammelanordnung vorliegen, einem Behälter und/oder einer manuellen Entnahme zuzuführen. Mit anderen Worten kann der Ausgabeförderer an dessen Ende einen Ausgabeabschnitt aufweisen, an dem Resthandpoststücke an eine weitere Verarbeitung übergeben werden können. Beispielsweise kann der Ausgabeförderer abschnittsweise kippbar sein, sodass die Resthandpoststücke von dem Ausgabeförderer ausgegeben werden können.

Vorzugsweise weist der Zulaufförderer zumindest einen Eingabeförderer auf, der dazu ausgestaltet ist, Resthandpoststücke aufzunehmen und auf den Zulaufförderer aufzubringen. Der zumindest eine Eingabeförderer kann ein von dem Zulaufförderer unabhängiges Förderelement darstellen. Der Eingabeförderer kann ein Bandförderer, Kugelförderer, Rollenförderer oder dergleichen sein. Der Eingabeförderer kann dazu ausgestaltet sein, dass ein Nutzer Resthandpoststücke darauf ablegt, um diese der automatisierten Resthandsortierung zuzuführen. Der Eingabeförderer kann dazu ausgestaltet sein, Resthandpoststücke auf den Zulaufförderer einzuschleusen. Dabei kann der Eingabeförderer dazu ausgestaltet sein zumindest ein Resthandpoststück zu dem Zulaufförderer zu transportieren.

Vorzugsweise ist die Steuereinheit dazu ausgestaltet, den zumindest einen Eingabeförderer so zu steuern, das Resthandpoststück an passenden Stellen in einem Förderstrom auf den Zulaufförderer gefördert wird. Mit anderen Worten kann auch das Einschleusen von Resthandpoststücken durch den Eingabeförderer automatisiert werden. Dies hat den Vorteil, dass dadurch ein Abstand der Resthandpoststücke auf den Zulaufförderer bereits eine vorbestimmte Abmessung aufweist, sodass die Weiterverarbeitung, insbesondere die Übergabe an Verteilförderer, problemlos und automatisch möglich ist.

Vorzugsweise ist der zumindest eine Eingabeförderer in einer vierten Ebene angeordnet, wobei die vierte Ebene gegenüber der ersten Ebene geneigt ist. Vorzugsweise ist die vierte Ebene in der Schwererichtung über der ersten Ebene angeordnet. Somit kann ein Resthandpoststück, welches von dem Eingabeförderer auf den Zulaufförderer eingeschleust wird, mithilfe der Schwerkraft transportiert werden. Dies wird insbesondere durch die Neigung des Eingabeförderers relativ zu der ersten Ebene befördert.

Vorzugsweise ist der zumindest eine Eingabeförderer in einem Bereich von 15° bis 21°, vorzugsweise von ungefähr 18°, relativ zu der horizontalen geneigt. Im Bereich von 15° bis 21 ° hat sich herausgestellt, dass die Neigung optimal ist, um die Haftreibung zwischen einem Resthandpoststück und der Oberfläche des Eingabeförderers aufrechtzuerhalten, sodass ein Resthandpoststück, welches manuell auf dem Eingabeförderer positioniert wird, dort auch liegen bleibt und nicht ausversehen auf den Zulaufförderer fällt. Die Neigung von ungefähr 18° hat sich als vorteilhaft erwiesen, bei einem breiten Spektrum von Resthandpoststücken.

Vorzugsweise weist der Eingabeförderers zumindest einen Sensor, insbesondere eine Kamera auf, der dazu ausgestaltet sein kann, Informationen über das Resthandpoststück zu erlangen und auszugeben. Der Sensor kann insbesondere dazu ausgestaltet sein, eine Abmessung des auf den Eingabeförderer abgelegten Resthandpoststücks zu erlangen. Ferner kann der Sensor dazu ausgestaltet sein, eine Information über das Ziel des Resthandpoststücks zu erlangen. Basierend darauf kann ein Ziel (beispielsweise ein bestimmter Ausgabeförderer) bestimmt werden, dem das Resthandpoststück zuzuführen ist. Vorzugsweise ist der Sensor als eine Kamera ausgestaltet, die zeitgleich eine Abmessung des Resthandpoststücks sowie die Adresse des Resthandpoststücks erkennen kann. Die Kamera kann vertikal oberhalb des Eingabeförderers angeordnet sein. Dies setzt jedoch voraus, dass das Resthandpoststück mit dem Adressaufkleber nach oben (d. h. der Kamera zugewandt) auf den Eingabeförderer abgelegt wird. Ferner ist es auch denkbar, dass ein Sechs-Seiten-Kamerasystem vorgesehen sein kann, sodass eine Positionierung des Resthandpoststücks auf dem Eingabeförderer unerheblich ist, da der Adressaufkleber in jeder Orientierung des Resthandpoststücks erkannt werden kann.

Vorzugsweise ist die Steuereinheit dazu ausgestaltet, den zumindest einen Eingabeförderer basierend auf einer Information über das Resthandpoststück zu steuern, um eine Einschleusung auf den Zulaufförderer zu realisieren. Mit anderen Worten kann die Steuereinheit dazu ausgestaltet sein, eine Lücke auf dem Zulaufförderer zu erkennen, die zu dem auf dem Eingabeförderer befindlichen Resthandpoststück passt, sodass dieses in die Lücke auf dem Zulaufförderer eingeschleust werden kann. Diese Bestimmung kann individuell für das jeweilige Resthandpoststück erfolgen und abhängig sein, von der Dimensionierung des Resthandpoststücks. Ferner kann die Steuereinheit dazu ausgestaltet sein, den Eingabeförderer schneller oder langsamer anzutreiben, je nachdem, ob eine Lücke zwischen zwei aneinander angrenzenden Resthandpoststücken auf dem Zulaufförderer klein oder groß ist. Durch ein schnelles antreiben des Eingabeförderers kann selbst eine kleine Lücke von einem Resthandpoststück genutzt werden. Ist eine Lücke größer, kann der Eingabeförderer auch langsamer angetrieben werden, um Energie zu sparen. Dadurch kann ein individueller und angepasster Betrieb der Resthandsortiervorrichtung realisiert sein.

Vorzugsweise weist der Zulaufförderer eine Labelvorrichtung auf, die dazu ausgestaltet ist, dass zumindest eine Resthandpoststück mit einem Label zu versehen. Das Labeln der Resthandpoststücke kann bei einem weiteren (beispielsweise manuellen) Sortierprozess benötigt werden. Vorzugsweise erfolgt das Labeln, nachdem eine Adresse des Resthandpoststücks gelesen wurde. Das Labeln kann beispielsweise durch Aufkleben eines individuell erstellten Aufklebers realisiert sein.

Vorzugsweise ist die Labelvorrichtung dazu ausgestaltet, das Label auf das Resthandprodukt während des Transports auf dem Zulaufförderer aufzubringen, insbesondere ohne, dass eine Transportgeschwindigkeit des Zulaufförderers verringert werden muss. Mit anderen Worten kann eine Aktorik bereitgestellt sein, welche das Label während des normalen Transports des Resthandpoststücks auf dem Zulaufförderer aufbringen kann. Dadurch ist keine Verlangsamung oder sogar Unterbrechung des Transports des Resthandpoststücks notwendig, sodass der Ablauf durch das Labeln der Resthandpoststücke nicht beeinflusst wird.

Vorzugsweise sind die erste Richtung und die zweite Richtung, in einer Draufsicht quer zueinander, insbesondere orthogonal zueinander ausgerichtet. Dadurch kann insgesamt eine kompakte Resthandsortiervorrichtung bereitgestellt sein.

Vorzugsweise sind eine Vielzahl von Verteilförderern und eine Vielzahl von Ausgabeförderern vorgesehen. Dadurch kann eine hohe Sortiertiefe der Resthandpoststücke erreicht werden. Vorzugsweise weist der Zulaufförderer eine Vielzahl von in der ersten Richtung hintereinander angeordneter Förderermodule auf. Somit kann an vielen Stellen des Zulaufförderers Resthandpoststücke ausgeschleust werden. Dadurch können eine Vielzahl von Verteilförderern mit Resthandpoststücken beschickt werden, wodurch die Sortiertiefe gesteigert werden kann.

Vorzugsweise ist jedem Fördermodul ein Verteilförderer und zumindest ein Ausgabeförderer zugeordnet. Vorzugsweise ist der zumindest eine Ausgabeförderer als eine Endstelle ausgestaltet. Mit anderen Worten kann jeder Ausgabeförderer für eine bestimmte Klasse von Resthandpoststücken als Ziel definiert werden.

Gemäß einem weiteren Aspekt der vorliegenden Erfindung wird ein Verfahren zum Sortieren von Resthandpoststücken bereitgestellt. Das Verfahren kann ein Zuführen eines Resthandpoststücks von einem Zulaufförderer auf einen Ausgabeförderer umfassen, sodass das Resthandpoststück in einer Sammelanordnung auf dem Ausgabeförderer angeordnet ist. Ferner kann das Verfahren ein Transportieren des Resthandpoststücks auf dem Ausgabeförderer in der Sammelanordnung, umfassen. Vorzugsweise kann das Verfahren ein Aufnehmen von zumindest einer Information über das Resthandpoststück umfassen, wobei das Zuführen des Resthandpoststücks von einem Zulaufförderer auf einen Ausgabeförderer basierend auf der zumindest einen Information über das Resthandpoststück erfolgen kann. Vorzugsweise wird vor dem Zuführen eines Resthandpoststücks von einem Zulaufförderer auf einen Ausgabeförderer, das Resthandpoststück auf den Zulaufförderer eingeschleust, insbesondere basierend auf der zumindest einen Information über das Resthandpoststück.

Gemäß einem Aspekt der vorliegenden Erfindung wird ein Resthandpoststück von einer oder mehreren Bedienkräften auf Eingabeförderer aufgebracht, welche über dem Zulaufförderer angeordnet sind. Über dem Eingabeförderer befinden sich jeweils eine Kamera, welche das Resthandpoststück erkennt und ein Bild des Resthandpoststücks bzw. der Adresse aufnimmt. Das Bild und die Trackinginformation des Resthandpoststücks wird an die Steuereinheit übermittelt und das Resthandpoststück kann auf den horizontalen Zulaufförderer eingeschleust werden. Wenn auf dem Zulaufförderer eine Lücke vorhanden ist, wird das Resthandpoststück beschleunigt und von oben auf den Zulaufförderer abgelegt. Das Einschleusen des Resthandpoststücks, d. h. der Startzeitpunkt und die Größe der benötigten Lücke auf dem Zulaufförderer, ist von der Lage und den Abmessungen des Resthandpoststücks abhängig. Beides wird mittels einer geeigneten Kamera an die Steuereinheit übermittelt. Nach dem Einschleusen des Resthandpoststücks wird dieses zur Labelvorrichtung transportiert. Die Transportstrecke zu der Labelvorrichtung ist so dimensioniert, dass das Leseergebnis (d.h. die Information, die durch die Kamera erlangt wurde) des Resthandpoststücks vorliegt und das Resthandpoststück gelabelt werden kann. Das Label des Resthandpoststücks kann durch eine oder mehrere Labelvorrichtungen, welche roboterunterstützt, durch Linearachsen bzw. an eine andere geeignete Aktorik realisiert ist, erfolgen kann. Vorzugsweise erfolgt das Labeln durch einen Roboterarm von oben, während des normalen Transports des Resthandpoststücks. Die Label werden für den weiteren (manuellen) Sortierprozess benötigt. Nachdem das Resthandpoststück gelabelt wurde, wird das Resthandpoststück an der entsprechenden Sortierstelle durch das nach unten schwenkbare Fördermodul ausgeschleust und auf einem quer zur Förderrichtung (d. h. die erste Richtung) angeordneten Verteilförderer positioniert. Zur besseren Positionierung des Resthandpoststücks ist der Verteilförderer geneigt. Nachdem die Positionierung des Resthandpoststücks auf dem Verteilförderer abgeschlossen ist, beschleunigt der Verteilförderer das Resthandpoststück quer zur ersten Richtung und legt es auf einem oder mehreren Ausgabeförderern ab. Der Ausgabeförderer ist so gesteuert, dass er bei jeder abgelegten Sendung, entsprechen der gewünschten Sammelanordnung nur kurz weiter taktet. Pro Ausgabeförderer (abhängig vom Anlagenlayout) können mehrere Ausgabeförderer vorhanden sein. Um das Rutschen eines Resthandpoststückes auf einem bereits abgelegten Resthandpoststück zu vermeiden, ist der erste Förderabschnitt des Ausgabeförderers in einem Winkel angeordnet. Alle Ausgabeförderer laufen synchron, d. h. sie starten/stoppen/takten gemeinsam. Durch einen Fußschalter an dem Ausgabeförderer kann der Ausgabeförderer gestartet werden. Die Resthandpoststücke, welche in der Sammelanordnung vorgesehen sind, werden so zur manuellen Entnahme oder in einem geeigneten Behälter transportiert. Durch die dadurch entstehende Lücke wird die Sammelanordnung der Resthandpoststücke unterbrochen und ein neue Sammelanordnung von Resthandpoststücken wird gebildet. Ab einer bestimmten Resthandpoststückdicke können die Resthandpoststücke nicht mehr in der Sammelanordnung angeordnet werden (beispielsweise Schuhkartons). Diese Sammelanordnungsgrenze wird mittels einer einstellbaren Lichtschranke, im Sendungstransport vor dem Labeln überprüft. Bei zu dicken Resthandpoststücken spricht die Lichtschranke an, und das Resthandpoststück wird in dem jeweiligen Ausgabeförderer als Einzelsendung behandelt, d. h. die Ausgabeförderer unterbrechen die Sammelanordnung und takten soweit, dass sie nicht sammelanordnungsfähige Resthandpoststücke als Einzelsendungen aufgenommen werden können.

Gemäß einem weiteren Aspekt der vorliegenden Erfindung wird eine Verwendung der Resthandvorrichtung gemäß einer der obigen Ausgestaltungen bei einem Sortierprozess von Resthandpoststücken bereitgestellt.

Einzelne Merkmale Ausführungsformen können mit anderen Merkmalen oder anderen Ausführungsformen kombiniert werden und so neue Ausführungsform bilden. Vorteile und Ausgestaltungen, die in Zusammenhang mit den einzelnen Merkmalen oder Ausführungsformen genannt sind, gelten analog auch für die neuen Ausführungsformen. Vorteile und Weiterbildungen, die in Zusammenhang mit der Vorrichtung erläutert wurden, gelten analog auch für das Verfahren und andersherum.

Im Folgenden werden zu bevorzugende Ausführungsformen mit Bezug auf die beigefügten Figuren im Detail beschrieben.
Figur 1 ist eine schematische und perspektivische Ansicht einer Resthandsortiervorrichtung gemäß einer Ausführungsform der vorliegenden Erfindung.
Figur 2 ist eine schematische und perspektivische Ansicht eines Teils einer Resthandsortiervorrichtung gemäß einer Ausführungsform der vorliegenden Erfindung.
Figur 3 ist eine schematische und perspektivische Ansicht eines Teils einer Resthandsortiervorrichtung gemäß einer Ausführungsform der vorliegenden Erfindung.
Figur 4 ist eine schematische und perspektivische Ansicht eines Teils einer Resthandsortiervorrichtung gemäß einer Ausführungsform der vorliegenden Erfindung.
Figur 5 ist eine schematische und perspektivische Ansicht einer Resthandsortiervorrichtung gemäß einer weiteren Ausführungsform der vorliegenden Erfindung.
Figur 6 ist eine schematische und perspektivische Ansicht einer Resthandsortiervorrichtung gemäß einer Ausführungsform der vorliegenden Erfindung.

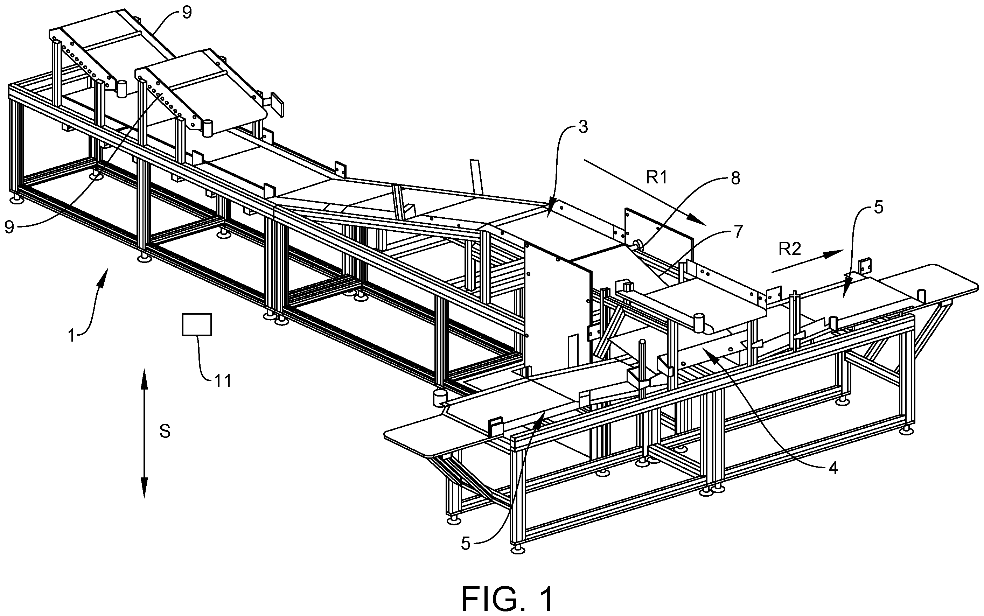

Figur 1 ist eine schematische und perspektivische Ansicht einer Resthandsortiervorrichtung 1 zum Sortieren von Resthandpoststücken 2. Die Resthandsortiervorrichtung 1 umfasst einen Zulaufförderer 3, einen Verteilförderer 4 und bei der vorliegenden Ausführungsform zwei Ausgabeförderer 5. Der Zulaufförderer 3 kann

Resthandpoststücke 2 in einer ersten Richtung R1 transportieren. Daraufhin kann das Resthandpoststück 2 durch ein schwenkbares Fördermodul 7 dem Verteilförderer 4 zugeführt werden. Das schwenkbare Fördermodul 7 ist dabei um eine Schwenkachse 8 schwenkbar. Von dem Verteilförderer 4 kann das Poststück entweder dem ersten Ausgabeförderer 5 oder dem gegenüberliegenden zweiten Ausgabeförderer 5 zugeführt werden. Ferner weist der Zulaufförderer 3 bei der vorliegenden Ausführungsform zwei Eingabeförderer 9 auf. Die Eingabeförderer 9 sind dazu ausgestaltet, Resthandpoststücke aufzunehmen und dem Zulaufförderer 3 zuzuführen.

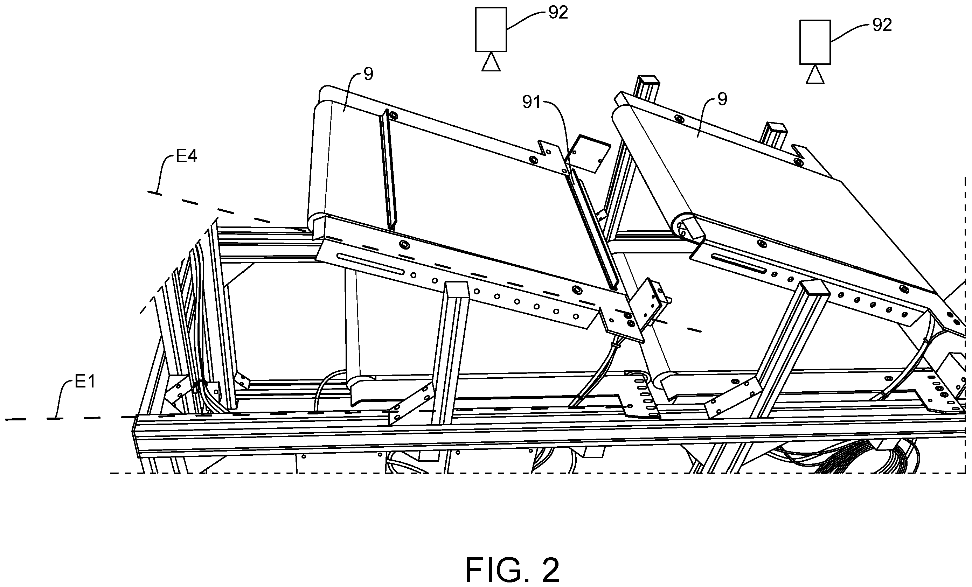

Figur 2 ist eine schematische und perspektivische Ansicht eines Teils der Sortiervorrichtung gemäß einer Ausführungsform der vorliegenden Erfindung. Genauer gesagt sind in Figur 2 die beiden Eingabeförderer 9, der in Figur 1 dargestellten Sortiervorrichtung 1 im Detail dargestellt. Die Eingabeförderer 9 befinden sich bei der vorliegenden Ausführungsform in einer vierten Ebene, die gegenüber der ersten Ebene geneigt ist. Die Eingabeförderer 9 der vorliegenden Ausführungsform sind als Bandförderer realisiert. Ferner weist der Eingabeförderer Rippen 91 auf, die für einen sicheren Transport eines Resthandpoststücks sorgen können. Schematisch ist ferner jeweils eine Kamera 92 dargestellt, die über jedem Eingabeförderern 9 vorgesehen ist. Die Kamera kann das Resthandpoststück, welches auf dem Eingabeförderer 9 aufgebracht ist, aufnehmen, um die Dimensionen und/oder die Adresse des Resthandpoststücks zu erfassen.

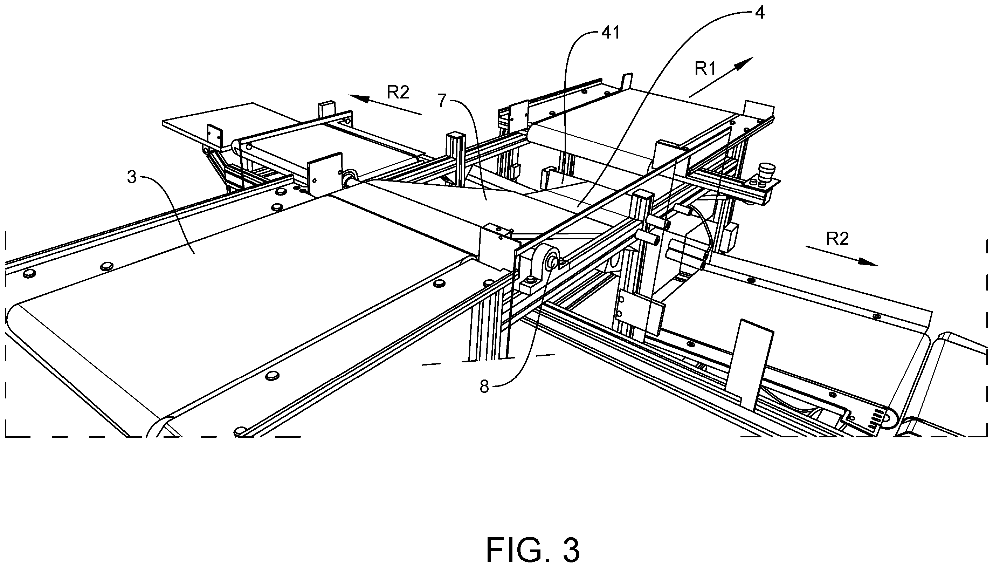

Figur 3 ist eine schematische und perspektivische Ansicht der Sortiervorrichtung 1 gemäß der in Figur 1 dargestellten Ausführungsform. Genauer gesagt ist in Figur 3, ein Teil des Zulaufförderers 3 dargestellt. Ferner ist das Fördermodul 7 erkennbar. Bei der in Figur 3 dargestellten Ausführungsform befindet sich das Fördermodul in der zweiten Position. Mit anderen Worten kann ein auf dem Zulaufförderer 3 transportiertes Resthandpoststück über das Fördermodul 7 dem darunterliegenden Verteilförderer 4 zugeführt werden. Das Fördermodul 7 ist um eine Schwenkachse 8 schwenkbar. Befindet sich das Fördermodul 7 in der ersten Position, bildet es mit der übrigen Fördererfläche des Zulaufförderers 3 eine ebene Fläche und kann Resthandpoststücke weiter in die erste Richtung transportieren.

Ferner ist in Figur 3 das Leitelement 41 des Verteilförderers 4 erkennbar. Wird ein Resthandstückgut über das Fördermodul 7 dem Verteilförderer 4 zugeführt, stößt das Resthandstückgut gegen das Leitelement 41. Somit kann eine vordefinierte Positionierung des Resthandpoststücks auf dem Verteilförderer 4 sichergestellt sein.

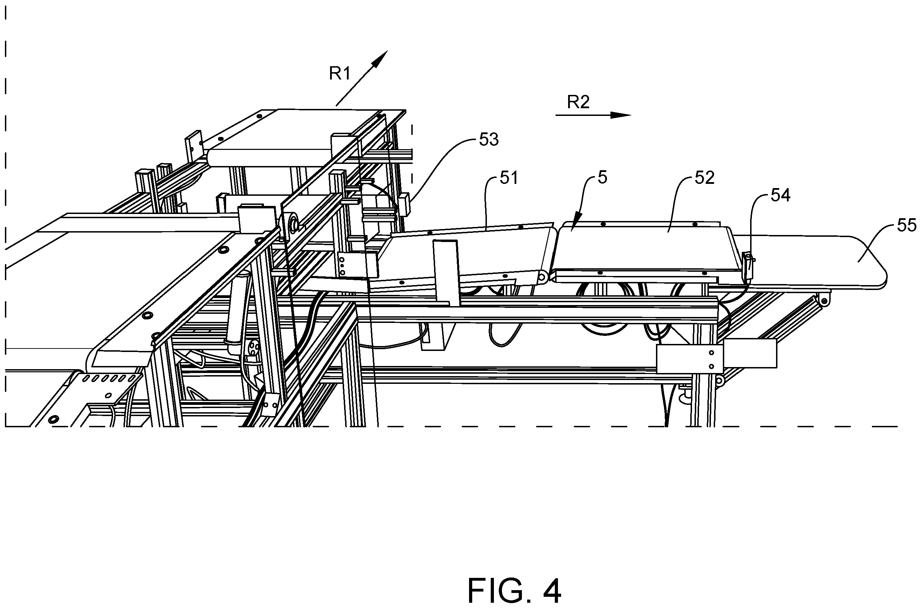

Figur 4 ist eine schematische und perspektivische Ansicht eines Teils der Resthandsortiervorrichtung 1 gemäß der in Figur 1 dargestellten Ausführungsformen. Genauer gesagt ist in Figur 4 der Ausgabeförderer 5 dargestellt. Der Ausgabeförderer 5 weist einen ersten Förderer Abschnitt 51 und einen zweiten Förderabschnitt 52 auf. Der erste Förderabschnitt 51 ist relativ zu dem zweiten Förderabschnitt 52 geneigt. Mit anderen Worten müssen Resthandpoststücke, die auf den Ausgabeförderer aufgebracht werden, auf dem ersten Fördererabschnitt gegen die Schwerkraft gefördert werden. Ferner weist der Ausgabeförderer 5 einen ersten Sensor 53 und einen zweiten Sensor 54 auf. Die Sensoren 53, 54 sind bei der vorliegenden Ausführungsform als Lichtschranken ausgestaltet. Der erste Förderer 53 kann hierbei überprüfen, ob die Sammelanordnung 6 korrekt gebildet wird. Der zweite Sensor 54 kann ein Signal ausgeben, wenn der Ausgabeförderer 5 voll ist. Stromabwärts des Ausgabeförderers 5 ist eine Entnahme 55 erkennbar, an der ein Nutzer die Sammelanordnung von Resthandpoststücken entnehmen kann.

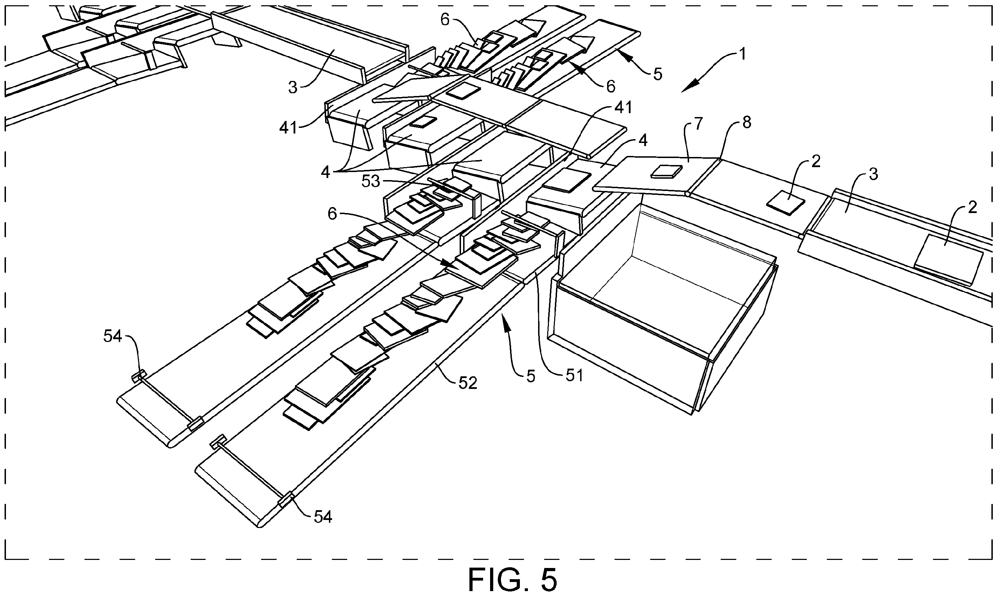

Figur 5 ist eine schematische und perspektivische Ansicht einer Sortiervorrichtung 1 gemäß einer weiteren Ausführungsform der vorliegenden Erfindung. Die Sortiervorrichtung 1 der vorliegenden Ausführungsform unterscheidet sich von der zuvor beschriebenen Ausführungsform darin, dass eine Vielzahl von hintereinander geschalteten Fördermodulen 7 vorgesehen sind, denen jeweils ein Verteilförderer 4 zugeordnet ist. Jedem Verteilförderer ist wiederum ein Ausgabeförderer 5 zugeordnet. Die einzelnen Merkmale der einzelnen Vorrichtungen entsprechen der zuvor beschriebenen Ausführungsform. Somit können eine Vielzahl von hintereinander geschalteten Verteilförderern 4 vorgesehen sein, um die Sortiertiefe weiter zu erhöhen. Ferner ist in Figur 5 eine Sammelanordnung 6 dargestellt, bei der Resthandpoststücke in einer Sammelanordnung auf dem Ausgabeförderer 5 transportiert werden.

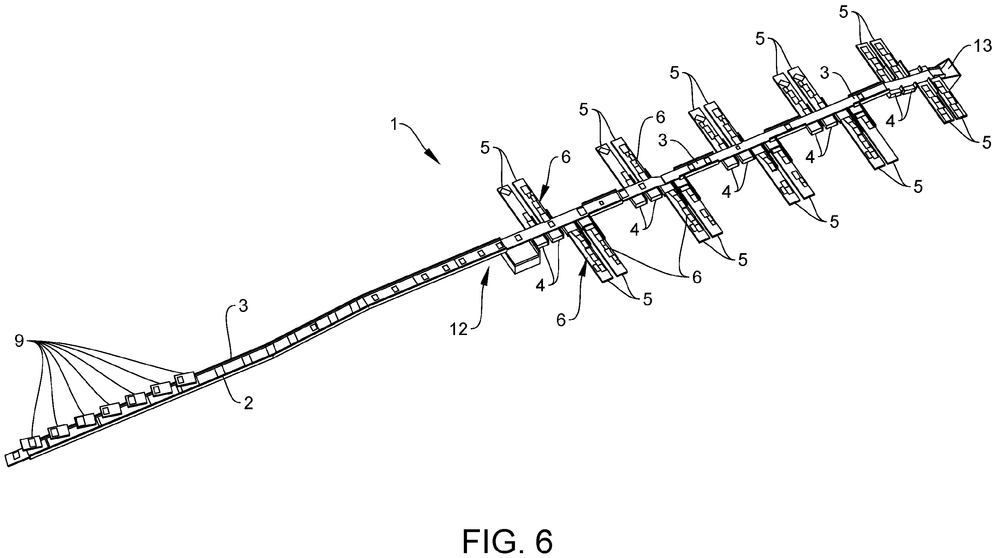

Figur 6 ist eine schematische und perspektivische Ansicht einer Sortiervorrichtung 1 gemäß einer weiteren Ausführungsform der vorliegenden Erfindung. Die Sortiervorrichtung 1 der vorliegenden Ausführungsform entspricht im Wesentlichen der vorherigen Ausführungsform mit dem Unterschied des nun auch die Labelvorrichtung 12 erkennbar ist. Ferner sind eine Vielzahl von Eingabeförderern 9 vorgesehen, die Resthandpoststücke 2 auf den Zuführförderer 3 aufbringen. Anschließend werden die Resthandpoststücke an der Labelvorrichtung mit einem Label versehen und weiter zu den jeweiligen Ausgabeförderern 5 transportiert. Ganz am Ende des Zulaufförderers 3 befindet sich ein Auffangbehälter 13. In diesen können beispielsweise Resthandpoststücke eingetragen werden, die eine manuelle Handhabung benötigen.

### Bezugszeichenliste:

- 1: Resthandsortiervorrichtung
- 2: Resthandpoststücke
- 3: Zulaufförderer
- 4: Verteilförderer
- 5: Ausgabeförderer
- 6: Sammelanordnung
- 7: Fördermodul
- 8: Schwenkachse
- 9: Eingabeförderer
- 11: Steuereinheit
- 12: Labelvorrichtung
- 13: Behälter
- 51: erster Förderabschnitt
- 52: zweiter Förderabschnitt
- 53: erster Sensor
- 54: zweiter Sensor
- 55: Ausgabe
- 91: Rippe
- 92: Kamera
- 41: Gleitelement

## Patentansprüche

1. Resthandsortiervorrichtung (1) zum Sortieren von Resthandpoststücken (2), umfassend:
einen Zulaufförderer (3), der dazu ausgestaltet ist, zumindest ein Resthandpoststück (2) in einer ersten Richtung (R1) zu fördern;
zumindest einen Verteilförderer (4), der dazu ausgestaltet ist, das zumindest eine Resthandpoststück (2) von dem Zulaufförderer (3) zu übernehmen und zu zumindest einem Ausgabeförderer (5) zu fördern; und
eine Steuereinheit (11), die dazu ausgestaltet ist, den Verteilförderer (4)
und/oder den Ausgabeförderer (5) so zu steuern, dass Resthandpoststücke (2) auf dem Ausgabeförderer (5) in einer Sammelanordnung (6) gesammelt werden;
wobei der Ausgabeförderer (5) dazu ausgestaltet ist, die Sammelanordnung (6) von Resthandpoststücke (2) in einer zweiten Richtung (R2) zu fördern.

2. Resthandsortiervorrichtung (1) gemäß Anspruch 1, wobei sich zumindest zwei Resthandpoststücke in der Sammelanordnung zumindest teilweise überlappen.

3. Resthandsortiervorrichtung (1) gemäß einem der vorhergehenden Ansprüche, wobei die Steuereinheit (11) dazu ausgestaltet ist, den Verteilförderer (4) und/oder den Ausgabeförderer (5) so zu steuern, dass ein Resthandpoststück (2), welches zuerst auf den Ausgabeförderer (5) aufgebracht ist, zumindest abschnittsweise weiter in der zweiten Richtung vorragt als ein danach auf den Ausgabeförderer (5) aufgebrachtes Resthandpoststück (2).

4. Resthandsortiervorrichtung (1) gemäß einem der vorhergehenden Ansprüche, wobei sind die Resthandpoststücke (2) in der Sammelanordnung (6) zumindest abschnittsweise schindelartig angeordnet.

5. Resthandsortiervorrichtung (1) gemäß einem der vorhergehenden Ansprüche, wobei die Steuereinheit (11) dazu ausgestaltet ist, den Verteilförderer (4) und/oder den Ausgabeförderer (5) basierend auf zumindest einer Information über das zumindest eine Resthandpoststück (2) so zu steuern, dass das Resthandpoststück (2) auf dem Ausgabeförderer (5) in der Sammelanordnung angeordnet ist.

6. Resthandsortiervorrichtung (1) gemäß einem der vorhergehenden Ansprüche, wobei der Verteilförderer (4) hinsichtlich des Zulaufförderers (3) und/oder des Ausgabeförderers (5) geneigt ist.

7. Resthandsortiervorrichtung (1) gemäß einem der vorhergehenden Ansprüche, wobei der Zulaufförderer (3) zumindest ein schwenkbares Fördermodul (7) aufweist, wobei das zumindest eine Fördermodul (7) dazu ausgestaltet ist, das Resthandpoststück (2) entweder zu dem Verteilförderer (4) zu fördern oder weiter auf dem Zulaufförderer (3) zu fördern.

8. Resthandsortiervorrichtung (1) gemäß einem der vorhergehenden Ansprüche, wobei der Verteilförderer (4) ein Leitelement (41) aufweist, welches dazu ausgestaltet ist, zumindest ein Resthandpoststück (2), welches von dem Zulaufförderer (3) zugeführt wird, zu führen.

9. Resthandsortiervorrichtung (1) gemäß einem der vorhergehenden Ansprüche, wobei der Zulaufförderer eine Labelvorrichtung (12) aufweist, die dazu ausgestaltet ist, dass zumindest eine Resthandpoststück (2) mit einem Label zu versehen.

10. Resthandsortiervorrichtung (1) gemäß einem der vorhergehenden Ansprüche, wobei der Ausgabeförderer (5) zumindest einen ersten Förderabschnitt (51) und einen zweiten Förderabschnitt (52) aufweist, wobei der erste Förderabschnitt (51) in Förderrichtung stromaufwärts angeordnet ist und relativ zu dem zweiten Förderabschnitt (52) geneigt ist.

11. Resthandsortiervorrichtung (1) gemäß einem der vorhergehenden Ansprüche, wobei die Resthandsortiervorrichtung (1) zumindest einen Sensor aufweist, der dazu ausgestaltet ist, zu detektieren, ob ein Resthandpoststück (2) eine Sammelanordnungsgrenze übersteigt oder nicht, und eine Messinformation auszugeben.

12. Resthandsortiervorrichtung (1) gemäß Anspruch 11, wobei die Steuereinheit (11) dazu ausgestaltet ist, basierend auf der Messinformation, den Ausgabeförderer (5) zu steuern.

13. Resthandsortiervorrichtung (1) gemäß einem der vorhergehenden Ansprüche, wobei ist die Steuereinheit (11) dazu ausgestaltet, den Ausgabeförderer (5) schrittweise anzutreiben.

14. Resthandsortiervorrichtung (1) gemäß einem der vorhergehenden Ansprüche, wobei der Zulaufförderer (3) zumindest einen Eingabeförderer (9) aufweist, der dazu ausgestaltet ist, Resthandpoststücke (2) aufzunehmen und auf den Zulaufförderer (3) aufzubringen.

15. Verfahren zum Sortieren von Resthandpoststücken, umfassend:
Zuführen eines Resthandpoststücks von einem Zulaufförderer auf einen Ausgabeförderer, so dass das Resthandpoststück in einer Sammelanordnung auf dem Ausgabeförderer angeordnet ist,
Transportieren des Resthandpoststücks auf dem Ausgabeförderer in der Sammelanordnung.
